# EUROPEAN PATENT SPECIFICATION

(11) **EP 3 517 515 B1**
(45) Date of publication and mention of the grant of the patent: **12.01.2022**
(21) Application number: 18212792.8
(22) Date of filing: 14.12.2018
(51) Int. Cl.: C04B 28/02, C04B 40/00

(54) **FIBER BUNDLE FOR REINFORCEMENT OF A CEMENTITIOUS MATRIX, ITS USES AND METHOD OF OBTENTION**
FASERBÜNDEL ZUR VERSTÄRKUNG EINER ZEMENTHALTIGEN MATRIX, VERWENDUNG UND ART DER HERSTELLUNG
FAISCEAU DE FIBRES POUR LE RENFORCEMENT D'UNE MATRICE CIMENTAIRE, SES UTILISATIONS ET SON PROCEDE D'OBTENTION

(30) Priority: 15.12.2017 PT 2017110456
(43) Date of publication of application: 31.07.2019
(73) Proprietor: Omnicor - Manufacturas Internacionais de Cordoarias, Lda, 3885-307 Cortegaça (PT)
(72) Inventor: JOÃO MIGUEL, GEITOEIRA E SÁ, OVAR (PT)
(74) Representative: Patentree

(56) References cited:
- US-A1- 2001 051 266
- US-A1- 2004 038 027

## Description

### Technical Domain

The present disclosure relates to a polymerfiber bundle for reinforcing materials with a cementitious matrix - cement, concrete and mortar, method of production and uses thereof.

The present disclosure is within the area of civil construction, namely in the presentation of materials with improved resistance and post-cracking, especially for service limit states and for concrete and mortar construction elements.

### Background Art

Cementitious matrix materials, such as concrete and mortar, have a reduced tensile strength, and when applied to structural elements they can easily crack under service conditions. Reinforcements in the form of steel rods have traditionally been adopted to increase the tensile strength of structural elements in concrete or mortars. More recently, discrete fibers have been used (relatively small in length, not exceeding 60 mm in general) in the reinforcement of cementitious matrix materials.

When homogeneously inserted into the cementitious matrix, fibers improve post-cracking, toughness, energy absorbing capacity and impact strength performances. The improved performance provided by the fibers is ensured by mechanisms of restriction to the opening and propagation of cracks guaranteed by the fibers that intersect the fracture surfaces, as well as by the increase of the capacity of redistributing stresses along the structural elements assured by stress transfer between the faces of the cracks provided by the fibers binding them.

The ability of the fibers to transfer forces between the faces of the cracks they pass through is known as fiber strength at their start-up within a cementitious medium (fiber pullout), which is a fundamental mechanism for characterizing fiber performance as reinforcement of fiber-reinforced concrete. To increase the pullout strength of the fibers, fibers have been provided with mechanical anchoring, through rolled or folded ends, and deformations of varying geometric configuration along their length. This type of anchoring has been extensively exploited in metal fibers, whereas in hydrophilicfibers the chemical adhesion due to fiber reaction with the pulp water is a relevant reinforcement mechanism.

The bond strength of the fiber-matrix interface is an important factor in the mechanical properties of fiber-reinforced concrete. Bonding mechanisms include physical or chemical adhesion, friction, mechanical anchoring. These mechanisms must be properly mobilized, and to this end it is necessary to take into account the tensile strength of the fiber and the strength of the involving cementitious medium in order not to break the fiber. In fact, the occurrence of this breaking mode prevents the fibers from providing the desired advantages, and which are, fundamentally, the increase in post-cracking tensile strength, dissipation and absorption energy, impact strength, and durability of the material structures of cementitious matrix due to the restriction to the crack opening provided by the fibers. Thus, the fibers must slide relative to their involving cementitious medium, the restriction to this sliding being as high as possible, but limited enough so that no breaking of the fiber occurs.

The bonding conditions of the fibers to the involving cementitious matrix may be improved by increasing the surface area of the fiber in contact with that involving medium, or by the treatment given to the fiber surface in order to increase the slip resistance thereof. To this end, the fiber-producing industry has adopted several strategies for the production process, ranging from the type of material adopted, transverse and longitudinal geometry of the fibers, as well as the adoption of extrusion techniques followed by fibrillation, screening, stamping and surface treatment.

The use of fiber-reinforced concrete has become competitive in a number of applications, namely: ground- and pile- supported floors, prefabricated elements to partially or completely replace conventional reinforcement, mainly stirrups, tunnels and slope containment.

There is a wide variety of fibers, of different materials, shapes and cross-sections. The most common fibers in the reinforcement of cementitious matrix materials are steel, carbon, glass, and synthetic fibers. As an example of synthetic fibers for the construction market the following may be pointed out: polyethylene, polypropylene, acrylic, PVA, polyamide, and polyester.

Recently there has been an increase in the use of synthetic fibers in the reinforcement of cementitious matrix materials, as an alternative to steel and glass fibers, both due to the economic aspect and due to the durability thereof.

The literature presents several publications of synthetic fibers for reinforcement of mortars and concrete. Likewise, researches on glass, steel, aramid and carbon fibers are known. Some research indicates a decrease in long term reinforcement mechanisms for glass fibers, especially the cementitious materials reinforced with these fibers are submitted to wet-drying cycles. On the other hand, the susceptibility of the metallic fibers to corrosion phenomena has presented some obstacle to its use in applications where this phenomenon has to be avoided, and its high rigidity does not favor its use in the control of retraction cracking, where the synthetic fibers have greater potential to limit the crack opening. However, not all synthetic fibers are suitable for this purpose. For example, carbon fibers, in addition to their high price, have low adhesion to cementitious matrix materials, and it is not possible to mobilize their relatively high tensile strength and elasticity modulus. Some development has also been carried out in the use of plant fibers, such as cellulose fibers and sisal, but the pretreatment required to guarantee its dimensional stability when involved by a medium with moisture content fluctuations, as well as to avoid low durability in mediums with an alkalinity content typical of cementitious matrix materials, justify its almost exclusive use in non-structural applications.

Polypropylene fibers have a number of characteristics which make them especially capable of reinforcing mortars or concrete, such as: low cost, durability, ductility, easy dispersion and insertion in concrete and a good anchoring capacity in cementitious matrix materials provided they are properly designed. It should also be noted that polypropylene fibers are not susceptible to corrosion, and their properties do not degrade in alkaline mediums typical of cementitious matrices. However, most polypropylene fibers are technically insufficient for the structural reinforcement of cementitious-based materials since, for percentages used in standard applications, the post-cracking resistance of cementitious materials reinforced with these fibers does not guarantee the verification of the limit states of use and last of structures made up of these materials, in light of the Model Code 2010 recommendations.

In a recent past, synthetic fibers were mostly used to control retraction phenomena. Currently, synthetic fibers are used for this purpose, as well as for structural reinforcement and control of phenomena of detachment of the concrete when subjected to high temperatures. Recent studies show that, within the family of synthetic fibers, polypropylene fibers are the most efficient in reinforcing cementitious matrix materials. [1], [2] and [3].

In order to improve the mechanical properties of concrete and mortars reinforced with polypropylene fibers, it is necessary to increase the strength of the fiber-matrix interface bond through changes in the material composition of the fiber, the material and geometrical properties of its surface, and of the geometry of the fiber at its cross and longitudinal section.

Efforts have been made to improve the properties of polypropylene fibers, in particular by incorporating additives into the fiber mass. Document JP6219797 by Daiwabo Creta describes bicomponent polypropylene fibers containing in their peripheral part calcium carbonate. In GB2030891, dissembling particles are embedded by bombardment in thermoplastic fibers. This incorporation of additives into the mass of the polypropylene fibers increases the cost of manufacture and has effects on the mechanical properties of the reinforcing fibers, namely by the reduction of toughness thereof.

In EP0525737 by Daiwabo, stereoregular polypropylene fibers having high tensile strength are described.

EPA 0537929 describes prefabricated products produced from cement reinforced with this type of polypropylene fiber. US 2001/051266 discloses a fiber reinforcement material for cement. The material has cuts in the surface.

One of the problems observed in these fiber-cement products and reinforced with this type of fiber is the appearance of cracks in the edges of the slabs, especially in the course of the long-term aging of the materials.

These facts are described in order to illustrate the technical problem solved by the embodiments of the present document.

### General Description

One of the objects of the present disclosure is to describe a polypropylene and/or polyethylene fiber for reinforcing concrete or mortars with high breaking strength, low cost, having properties that allow increasing the bonding strength of the fiber-matrix interface, and the post-cracking tensile strength of concrete or mortars.

In one embodiment, it has been observed that the polypropylene fibers which have undergone a surface treatment created by mechanical indentation on the surface, and which are subjected to a twist promoting a three-dimensional variation, have an enhanced performance when applied to concrete, particularly the post-cracking tensile strength.

One of the main fiber reinforcement mechanisms of the present disclosure is based on the friction between the fibers and the involving cementitious medium, these mechanisms having been maximized by a set of factors that synergistically improve the performance thereof, namely: equivalent diameter/number of fibers, twist, weight, fiber length and surface treatment in particular the mechanical indentation.

One aspect of the present disclosure is to describe a process for treating polypropylene fibers for reinforcing molded products made of concrete or mortars produced by means of a hydraulic set composition comprising, namely, water, hydraulic binders, aggregates and reinforcing fibers.

In one embodiment, the fibers of the present disclosure may comprise a surface treatment of the fibers by mechanical indentation, a mechanical twist, wherein the diameter and length of the fibers is variable.

In one embodiment, the fibers of the present disclosure can be obtained by extrusion, in this case being monofilaments of fibers comprised of polyolefins, polypropylene, polyethylene, or mixtures thereof.

A further aspect of the present embodiment describes a surface treatment process of polypropylene fibers for reinforcing mortar or concrete. This process comprises a surface treatment consisting of a mechanical indentation in a particularly advantageous manner, namely being a relief in the longitudinal direction of the fiber through a mechanical system which causes dimension variations in the fiber thickness, creating a three-dimensional effect.

In one embodiment, upon obtaining the surface treated monofilaments, a fiber bundle for reinforcement of mortars or concrete is generated which comprises a plurality of twisted polymer monofilaments having a twist degree and a given weight.

In one embodiment, the various monofilaments may undergo a twist process, imputing onto them a twist in which the twist degree of the fiber bundle is less than 60 t/m.

In one embodiment, cement may be the binder. However, all other hydraulic set binders can be used instead of cement.

In one embodiment, the reinforcing fibers of the present disclosure have a tensile strength greater than 400 MPa and an elasticity modulus greater than 6.0 GPa, wherein tensile strength and elasticity are measured as defined in the standard EN 14889-2: 2008.

One aspect of the present disclosure relates to a fiber bundle for reinforcement of mortars or concrete comprising
a plurality of polymer monofilaments having a twist degree of the fiber bundle ranging from 0 to 50 turns/m (t/m);
wherein the diameter of each monofilament ranges from 0.5 to 0.7 mm;
wherein the length of the fiber bundle ranges from 18 to 65 mm;
wherein the weight of each monofilament ranges between 1500 and 3000 den;
wherein each monofilament comprises mechanical indentation (embossing)
wherein mechanical indentation of each monofilament causes an amplitude from 0.01-1 mm.

In one embodiment, the mechanical indentation causes a ripple of the amplitude (i.e., the variation of the coordinates in each monofilament with respect to the central axis x) between 0.02-1 mm; preferably 0.02-0.8 mm, more preferably 0.02-0.7 mm, preferably 0.5-0.7 mm.

It has been found that the maximum strength of the fiber substantially increases at least 150% more with respect to the fiber without indentation when each monofilament comprises mechanical indentation, wherein the dimension variation of each monofilament relative to the central axis of the monofilament ranges between 0.02-1 mm.

In the present disclosure, denier (symbol: den) of a strand/fiber is equal to the weight in grams per 9000 meters of that same strand. Therefore, if a sample of strand has 1 gram in weight and a length of 9000 meters, the title shall be 1 den. Therefore, if we have a sample with "n" grams in a length of 9000 meters, the title shall be "n" den. It is usually used in synthetic fibers and filaments. K = 9000 m/g. Ex.: A polyester strand in 180 den filaments has 180g in its 9000m.

In one embodiment, the polymer of the polymer monofilaments comprises polyolefin, in particular, polypropylene, polyethylene, or mixtures thereof, preferably polypropylene.

In one embodiment, the monofilaments are obtained by extrusion.

Fiber bundle according to the preceding claim wherein the bundle may further comprise a water-soluble film, such as PVA.

In one embodiment, the monofilament bundles may be bound by a water-soluble film.

In one embodiment, the monofilament may contain a weight percentage of:
polypropylene between 60-100% (w/w);
polyethylene between 0-40% (w/w).

In one embodiment, the bundle may contain between 1000 and 8000 untwisted monofilaments, preferably between 2000 and 4000 untwisted monofilaments, more preferably between 2700 and 3900 untwisted monofilaments.

In one embodiment, the bundle may contain between 1 and 50 twisted monofilaments, preferably between 10 and 40 twisted monofilaments, more preferably between 20 and 30 twisted monofilaments.

In one embodiment, the bundle may contain a torsion degree of the fiber bundle ranging between 10-40 t/m (turns/m), more preferably between 20-40 t/m (turns/meter).

In one embodiment, the weight of each monofilament ranges between 1500 and 3000 den.

In one embodiment, the polymer monofilaments may further comprise additives, in particular dyes, lubricants, minerals, or mixtures thereof.

A further aspect of the present disclosure relates to mortar or concrete comprising the fiber bundle described in the present disclosure.

Mortar or concrete according to the preceding claim comprising at least 2 kg fiber bundle/ m³ mortar or concrete as described in any one of the preceding claims, preferably between 2.5-8 kg _{fiber bundle}/m³ mortar or concrete; preferably between 3-5 kg fiber _{bundle}/m³ mortar or concrete.

The invention is hereinafter described in more detail by way of examples.

### Brief Description of the Figures

For an easier understanding, figures are herein attached, which represent preferred embodiments which are not intended to limit the object of the present description.

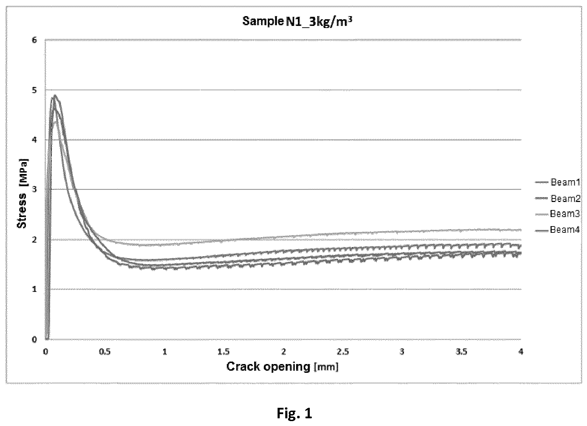

**Figure 1****:** Results of flexural tests of reinforced concrete with 3kg/m³.

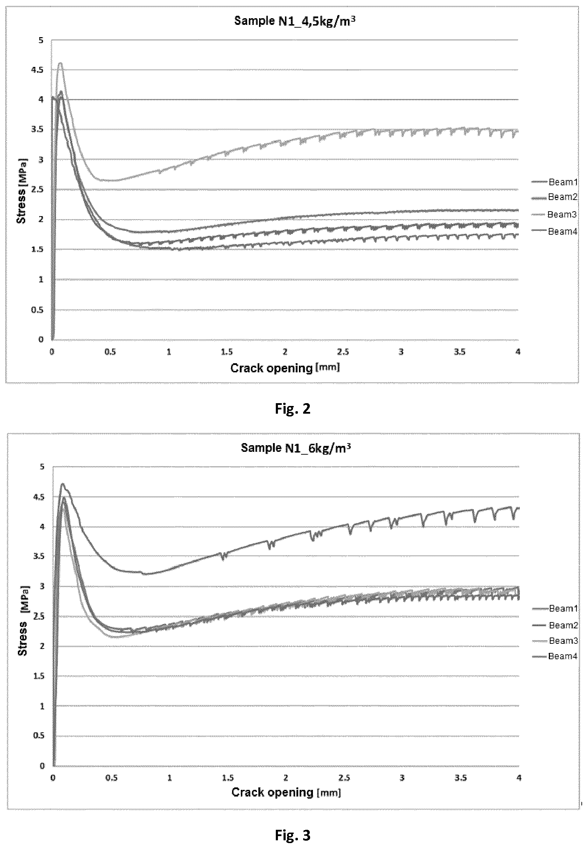

**Figure 2****:** Results of flexural tests of reinforced concrete with 4.5kg/m³.
**Figure 3****:** Results of flexural tests of reinforced concrete with 6 kg/m³.

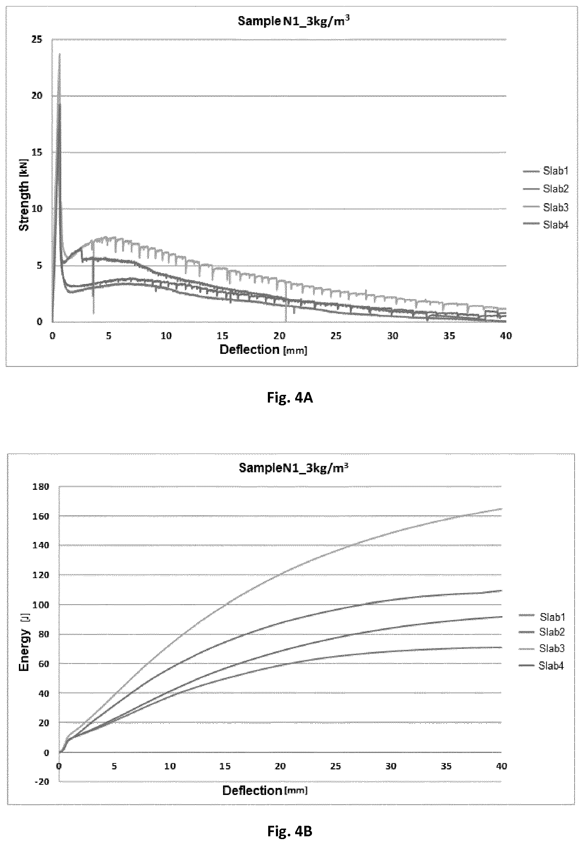

**Figure 4A****:** Results of the energy absorption test on reinforced concrete slabs with 3 kg/m³ of fibers - Force-Deflection Ratio of the energy absorption test.
**Figure 4B****:** Results of the energy absorption test on reinforced concrete slabs with 3 kg/m³ of fibers - Energy-Deflection Ratio of the energy absorption test.

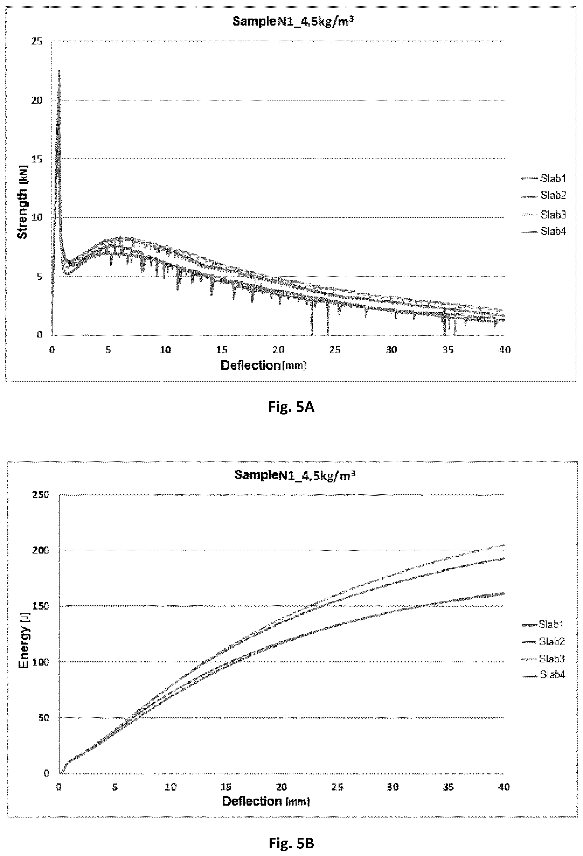

**Figure 5A****:** Results of the energy absorption test on reinforced concrete slabs with 4.5 kg/m³ of fibers - Force-Deflection Ratio of the energy absorption test.
**Figure 5B****:** Results of the energy absorption test on reinforced concrete slabs with 4.5 kg/m³ of fibers - Energy-Deflection Ratio of the energy absorption test.

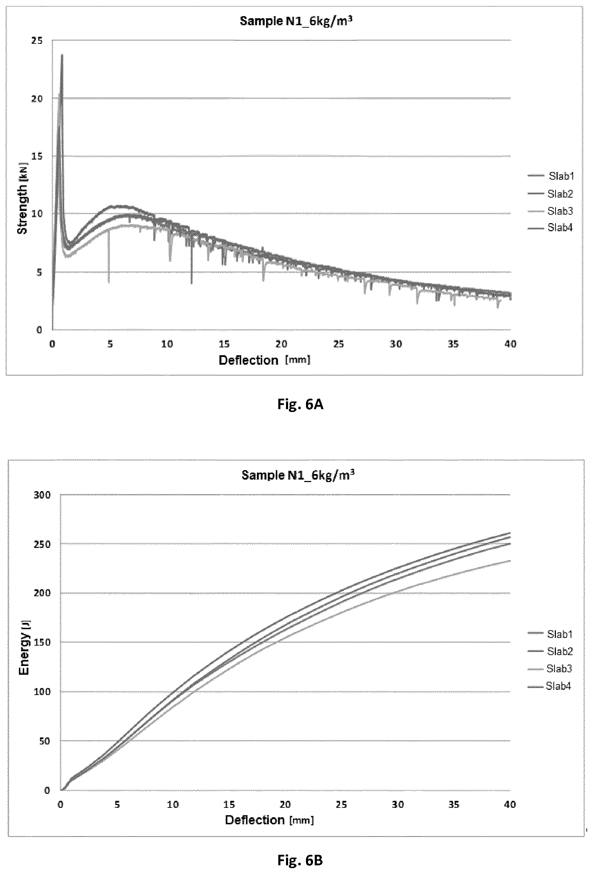

**Figure 6A****:** Results of the energy absorption test on reinforced concrete slabs with 6 kg/m³ of fibers - Force-Deflection Ratio of the energy absorption test.
**Figure 6B****:** Results of the energy absorption test on reinforced concrete slabs with 6 kg/m³ of fibers - Energy-Deflection Ratio of the energy absorption test.
**Figure 7****:** Results of flexural tests of reinforced concrete with 3 kg/m³.
**Figure 8****:** Results of flexural tests of reinforced concrete with 4.5 kg/m³.
**Figure 9****:** Results of flexural tests of reinforced concrete with 6 kg/m³.

For an easier understanding, some examples are hereinafter described, which represent preferred embodiments which are not intended to limit the object of the present description.

The examples outside the scope of the claims are comparative examples.

### Example 1

A fiber-reinforced concrete composition having the composition shown in **Table I** was prepared.

Wherein the fiber bundles added to the concrete comprise the following characteristic:
a plurality of polyolefin monofilaments, with 3300 monofilaments per fiber bundle; without twisting;
wherein the diameter of each monofilament is 0.68 mm;
wherein the length of the fiber bundle is 54 mm;
wherein the weight of each monofilament is 3000 den;
wherein the mechanical indentation of monofilaments causes an amplitude of 0.13 mm; i.e. the dimension variation of each monofilament relative to the central axis of the monofilament is 0.13 mm.

**Table I - Composition of fiber-reinforced concrete**

| Fiber dosage [kg] | Cement [kg] | Water [dm³] | Fly ash [kg] | Fine sand [kg] | Medium sand [kg] | Gravel 12 [kg] | Superplasticizer [dm³] |
|---|---|---|---|---|---|---|---|
| 3.0 | 330 | 198 | 100 | 515 | 491 | 646 | 6.88 |
| 4.5 | | | | | | | |
| 6.0 | | | | | | | |

The assessment of the mechanical properties of BRFS, namely the compressive strength and flexural strength, were performed using standard cylindrical specimens (150mm in diameter and 300mm in height), prismatic (150×150×600mm3), and circular slabs (600mm in diameter and 60mm thick). Compression and flexural strength tests were performed according to standards NP EN 12390-3:2009 and NP EN 14651: 2005 respectively.

Compression tests: **Table II** shows the results for the compression tests performed on cylindrical specimens at 28 days.

**Table II - Synthesis of results obtained for compressive strength,**

| Fiber dosage kg/m³] | Average Compressive Stress [MPa] |
|---|---|
| 3.0 | 34.8 |
| 4.5 | 35.3 |
| 6.0 | 33.5 |

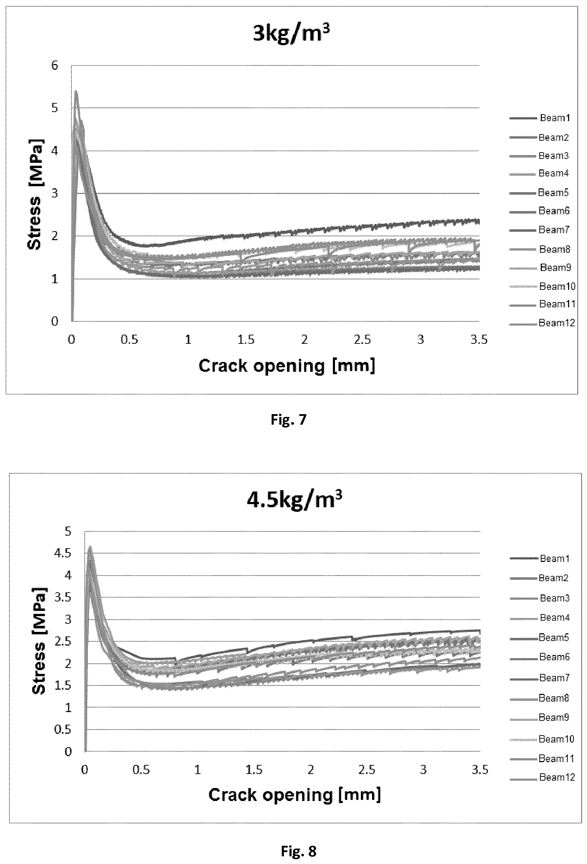

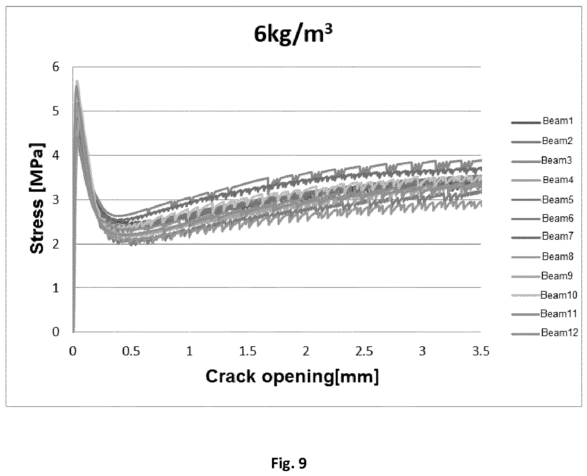

Flexural strength tests: **Tables II, III, IV** and V and **Figures 7, 8** and **9** show the results for flexural strength tests performed on prismatic specimens at 28 days of reinforced concrete with 3kg/m³, 4,5kg/m³ and 6kg/m³ respectively.

**Table III - Results of flexural tests of reinforced concrete with 3kg/m³,**

| **C20/25_3kg/m3** | **fct,L [MPa]** | **δ L [mm]** | **feq,2 [MPa]** | **feq,3 [MPa]** | **fR,1 [MPa]** | **fR,2 [MPa]** | **fR,3 [MPa]** | **fR,4 [MPa]** |
|---|---|---|---|---|---|---|---|---|
| Beam1 | 4.413 | 0.050 | 1.877 | 2.012 | 1.869 | 1.939 | 2.160 | 2.288 |
| Beam2 | 4.330 | 0.048 | 1.089 | 1.199 | 1.210 | 1.146 | 1.302 | 1.418 |
| Beam3 | 3.645 | 0.050 | 1.826 | 1.498 | 1.616 | 1.344 | 1.430 | 1.571 |
| Beam4 | 4.765 | 0.032 | 1.094 | 1.161 | 1.350 | 1.146 | 1.221 | 1.256 |
| Beam5 | 4.355 | 0.034 | 1.333 | 1.411 | 1.440 | 1.386 | 1.506 | 1.571 |
| Beam6 | 3.994 | 0.043 | 1.116 | 1.128 | 1.226 | 1.082 | 1.181 | 1.261 |
| Beam7 | 4.470 | 0.037 | 1.003 | 1.087 | 1.219 | 1.072 | 1.130 | 1.197 |
| Beam8 | 4.509 | 0.035 | 1.300 | 1.290 | 1.365 | 1.130 | 1.347 | 1.427 |
| Beam9 | 4.480 | 0.050 | 1.441 | 1.443 | 1.443 | 1.362 | 1.530 | 1.610 |
| Beam10 | 4.435 | 0.032 | 1.697 | 1.648 | 1.678 | 1.562 | 1.746 | 1.760 |
| Beam11 | 5.392 | 0.038 | 1.304 | 1.551 | 1.558 | 1.562 | 1.738 | 1.795 |
| Beam12 | 4.099 | 0.033 | 1.483 | 1.642 | 1.574 | 1.587 | 1.773 | 1.888 |

| **Average** | **4.407** | **0.040** | **1.380** | **1.423** | **1.462** | **1.360** | **1.505** | **1.587** |
|---|---|---|---|---|---|---|---|---|
| Standard Deviation | 0.424 | 0.008 | 0.294 | 0.270 | 0.204 | 0.265 | 0.303 | 0.313 |
| Variation Coef. | 10% | 19% | 21% | 19% | 14% | 20% | 20% | 20% |

**Table IV - Results of flexural tests of reinforced concrete with 4.5 kg/m³,**

| **C20/25_4.5kg/m3** | **fct,L** | **δ L** | **feq,2** | **feq,3** | **fR,1** | **fR,2** | **fR,3** | **fR,4** |
|---|---|---|---|---|---|---|---|---|
| | **[MPa]** | **[mm]** | **[MPa]** | **[MPa]** | **[MPa]** | **[MPa]** | **[MPa]** | **[MPa]** |
| Beam1 | 3.770 | 0.046 | 2.061 | 2.322 | 2.157 | 2.288 | 2.554 | 2.694 |
| Beam2 | 4.221 | 0.049 | 1.666 | 2.073 | 1.904 | 2.051 | 2.323 | 2.472 |
| Beam3 | 4.125 | 0.048 | 1.437 | 1.585 | 1.600 | 1.520 | 1.747 | 1.904 |
| Beam4 | 4.656 | 0.049 | 1.870 | 2.153 | 2.035 | 2.186 | 2.342 | 2.445 |
| Beam5 | 3.830 | 0.040 | 1.694 | 2.079 | 1.866 | 2.054 | 2.322 | 2.515 |
| Beam6 | 4.323 | 0.050 | 1.576 | 1.916 | 1.789 | 1.930 | 2.131 | 2.198 |
| Beam7 | 3.686 | 0.050 | 1.526 | 1.645 | 1.594 | 1.610 | 1.712 | 1.930 |
| Beam8 | 3.590 | 0.050 | 1.438 | 1.620 | 1.603 | 1.610 | 1.760 | 1.840 |
| Beam9 | 4.157 | 0.035 | 1.833 | 2.136 | 1.986 | 2.110 | 2.355 | 2.499 |
| Beam10 | 3.994 | 0.043 | 1.817 | 2.014 | 1.910 | 2.000 | 2.224 | 2.211 |
| Beam11 | 4.179 | 0.028 | 1.641 | 1.952 | 1.808 | 1.949 | 2.157 | 2.349 |
| Beam12 | 4.582 | 0.040 | 1.328 | 1.665 | 1.510 | 1.667 | 1.894 | 2.038 |
| **Average** | **4.093** | **0.044** | **1.657** | **1.930** | **1.813** | **1.915** | **2.127** | **2.258** |
| Standard Deviation | 0.336 | 0.007 | 0.212 | 0.245 | 0.202 | 0.252 | 0.282 | 0.281 |
| Variation Coef. | 8% | 16% | 13% | 13% | 11% | 13% | 13% | 12% |

**Table V - Results of flexural tests of reinforced concrete with 6 kg/m³,**

| **C20/25_6kg/m3** | **fct,L [MPa]** | **δ L [mm]** | f**eq,2 [MPa]** | **feq,3 [MPa]** | **fR,1 [MPa]** | **fR,2 [MPa]** | **fR,3 [MPa]** | **fR,4 [MPa]** |
|---|---|---|---|---|---|---|---|---|
| Beam1 | 4.614 | 0.033 | 2.280 | 2.780 | 2.456 | 2.810 | 3.126 | 3.280 |
| Beam2 | 5.178 | 0.041 | 1.791 | 2.441 | 2.061 | 2.518 | 2.774 | 3.043 |
| Beam3 | 5.098 | 0.042 | 2.377 | 3.174 | 2.643 | 3.238 | 3.622 | 3.821 |
| Beam4 | 5.056 | 0.036 | 2.169 | 2.809 | 2.413 | 2.797 | 3.123 | 3.443 |
| Beam5 | 4.576 | 0.037 | 2.204 | 2.783 | 2.387 | 2.768 | 3.197 | 3.389 |
| Beam6 | 4.352 | 0.034 | 2.199 | 2.806 | 2.368 | 2.858 | 3.195 | 3.419 |
| Beam7 | 4.842 | 0.041 | 2.276 | 3.054 | 2.555 | 3.126 | 3.462 | 3.635 |
| Beam8 | 5.123 | 0.035 | 1.824 | 2.370 | 2.106 | 2.379 | 2.614 | 2.832 |
| Beam9 | 4.758 | 0.050 | 2.024 | 2.603 | 2.186 | 2.595 | 2.880 | 3.243 |
| Beam10 | 5.696 | 0.038 | 2.039 | 2.833 | 2.346 | 2.832 | 3.254 | 3.405 |
| Beam11 | 5.558 | 0.030 | 1.894 | 2.592 | 2.186 | 2.630 | 2.960 | 3.133 |
| Beam12 | 4.403 | 0.041 | 2.105 | 2.686 | 2.323 | 2.698 | 3.021 | 3.280 |
| **Average** | **4.938** | **0.038** | **2.098** | **2.744** | **2.336** | **2.771** | **3.103** | **3.327** |
| Standard Deviation | 0.426 | 0.005 | 0.188 | 0.229 | 0.176 | 0.240 | 0.280 | 0.260 |
| Variation Coef. | 9% | 14% | 9% | 8% | 8% | 9% | 9% | 8% |

### Example 2

A twisted fiber reinforced concrete composition having the composition shown in **Table VI** was prepared.

Wherein the fiber bundles added to the concrete comprise the following characteristic:
a plurality of polyolefin monofilaments, with 25 monofilaments per fiber bundle;
with a 36 turn/m twist;
wherein the diameter of each monofilament is 0.52;
wherein the length of the fiber bundle is 54 mm
wherein the weight of each monofilament is 1750 den;
wherein the mechanical indentation of monofilaments causes an amplitude of 0.01 mm; i.e. the dimension variation of each monofilament relative to the central axis of the monofilament is 0.01 mm.

**Table VI - Composition of fiber-reinforced concrete**

| Fiber dosage [kg] | Cement [kg] | Water [dm³] | Fly ash [kg] | Fine sand [kg] | Medium sand [kg] | Gravel 12 [kg] | Superplasticizer [dm³] |
|---|---|---|---|---|---|---|---|
| 3.0 | 350 | 173 | 120.0 | 515 | 491 | 646 | 6.8 |
| 4.5 | | | | | | | |
| 6.0 | | | | | | | |

**Table VII - Synthesis of results obtained for compressive strength**

| **Fiber dosage [kg/m³]** | **Average Compressive Stress [MPa]** |
|---|---|
| 3.0 | 32.36 |
| 4.5 | 31.27 |
| 6.0 | 32.58 |

**Table VIII - Results of flexural tests of reinforced concrete with 3kg/m³**

| **Sample 3kg/m³** | **f_{ct,L}** | **δ_{L}** | **f_{eq,2}** | **f_{eq,3}** | **f_{R,1}** | **f_{R,2}** | **f_{R,3}** | **f_{R,4}** |
|---|---|---|---|---|---|---|---|---|
| | **[MPa]** | **[mm]** | **[MPa]** | **[MPa]** | **[MPa]** | **[MPa]** | **[MPa]** | **[MPa]** |
| **Beam1** | 4.726 | 0.050 | 1.744 | 1.716 | 1.824 | 1.626 | 1.786 | 1.843 |
| **Beam2** | 4.346 | 0.050 | 2.023 | 1.601 | 1.802 | 1.443 | 1.549 | 1.642 |
| **Beam3** | 4.099 | 0.050 | 2.247 | 2.055 | 2.074 | 1.939 | 2.064 | 2.160 |
| **Beam4** | 3.594 | 0.050 | 2.411 | 1.746 | 1.968 | 1.526 | 1.635 | 1.726 |
| **Average** | **4.191** | **0.050** | **2.106** | **1.779** | **1.917** | **1.634** | **1.758** | **1.843** |
| **Standard Deviation** | 0.474 | 0.000 | 0.289 | 0.194 | 0.128 | 0.217 | 0.226 | 0.227 |
| **Variation Coef.** | 11% | 0% | 14% | 11% | 7% | 13% | 13% | 12% |

**Table IX - Results of flexural tests of reinforced concrete with 4.5kg/m³**

| **Sample 4.5kg/m³** | **f_{ct,L}** | δ**_{L}** | **f_{eq,2}** | **f_{eq,3}** | **f_{R,1}** | **f_{R,2}** | **f_{R,3}** | **f_{R,4}** |
|---|---|---|---|---|---|---|---|---|
| | **[MPa]** | **[mm]** | **[MPa]** | **[MPa]** | **[MPa]** | **[MPa]** | **[MPa]** | **[MPa]** |
| **Beam1** | 3.885 | 0.050 | 2.038 | 1.969 | 1.955 | 1.872 | 2.051 | 2.138 |
| **Beam2** | 3.546 | 0.050 | 1.954 | 1.786 | 1.781 | 1.690 | 1.837 | 1.910 |
| **Beam3** | 4.432 | 0.050 | 2.689 | 3.066 | 2.653 | 3.037 | 3.328 | 3.498 |
| **Average** | **4.042** | **0.050** | **1.935** | **1.652** | **1.789** | **1.523** | **1.604** | **1.712** |
| **Standard Deviation** | 3.976 | 0.050 | 2.154 | 2.118 | 2.044 | 2.030 | 2.205 | 2.314 |
| **Variation Coef.** | 0.368 | 0.000 | 0.360 | 0.645 | 0.413 | 0.686 | 0.771 | 0.808 |

**Table X - Results of flexural tests of reinforced concrete with 6kg/m³**

| **Sample _6kg/m³** | **f_{ct,L}** | **δ_{L}** | **f_{eq,2}** | **f_{eq,3}** | **f_{R,1}** | **f_{R,2}** | **f_{R,3}** | **f_{R,4}** |
|---|---|---|---|---|---|---|---|---|
| | **[MPa]** | **[mm]** | **[MPa]** | **[MPa]** | **[MPa]** | **[MPa]** | **[MPa]** | **[MPa]** |
| **Beam1** | 3.990 | 0.050 | 2.528 | 2.571 | 2.333 | 2.454 | 2.749 | 2.902 |
| **Beam2** | 4.333 | 0.050 | 3.575 | 3.634 | 3.398 | 3.475 | 3.901 | 4.144 |
| **Beam3** | 3.533 | 0.050 | 2.419 | 2.549 | 2.186 | 2.477 | 2.698 | 2.864 |
| **Average** | **3.302** | **0.050** | **2.679** | **2.574** | **2.298** | **2.451** | **2.704** | **2.826** |
| **Standard Deviation** | 3.790 | 0.050 | 2.800 | 2.832 | 2.554 | 2.714 | 3.013 | 3.184 |
| **Variation Coef.** | 0.462 | 0.000 | 0.527 | 0.535 | 0.567 | 0.507 | 0.592 | 0.641 |

**Table XI - Results of maximum fiber strength tests (pull-out)**

| | **Fiber without indentation** | **Indented fiber^{∗}** |
|---|---|---|
| | **Maximum Strength [N]** | |
| **1** | 37.3 | 100.7 |
| **2** | 23.1 | 125.1 |
| **3** | 31.4 | 109 |
| **4** | 2.1 | 119.9 |
| **5** | 45.2 | 130.4 |
| **6** | 30.4 | 128.5 |
| **Average [N]** | **32.75** | **118.93** |
| **Std Deviation** | 7.61 | 11.77 |
| **Var. Coef. [%]** | **23.23** | **9.90** |

| | | |
|---|---|---|
| ^{∗} The dimension variation of each monofilament relative to the central axis of the monofilament is 0.13 mm. | | |

It has been found that the maximum strength of the fiber substantially increases at least 150% more with respect to the fiber without indentation when each monofilament comprises mechanical indentation, wherein the dimension variation of each monofilament relative to the central axis of the monofilament ranges between 0.02-1 mm.

The term "comprises" or "comprising" when used herein is intended to indicate the presence of the features, elements, integers, steps and components mentioned, but does not preclude the presence or addition of one or more other features, elements, integers, steps and components, or groups thereof.

The embodiments described are combinable with each other.

The present invention is of course in no way restricted to the embodiments described herein and a person of ordinary skill in the art can foresee many possibilities of modifying it and replacing technical features with equivalents, depending on the requirements of each situation, as defined in the appended claims.

The following claims define additional embodiments of the present description.

## Claims

1. Fiber bundle for reinforcement of mortars or concrete comprising
a plurality of polymer monofilaments having a twist degree of the fiber bundle ranging from 0 to 50 t/m;
wherein the diameter of each monofilament ranges from 0.5 to 0.7 mm;
wherein the length of the fiber bundle ranges from 18 to 65 mm;
wherein the weight of each monofilament ranges between 1500 and 3000 den;
wherein each monofilament comprises mechanical indentation wherein the mechanical indentation of said monofilaments causes an amplitude from 0.01-1 mm.

2. Fiber bundle according to the preceding claim wherein the polymer of the polymer monofilaments comprises polyolefin.

3. Fiber bundle according to the preceding claim wherein the polymer of the monofilaments is polypropylene, polyethylene, or mixtures thereof, preferably polypropylene.

4. Fiber bundle according to the preceding claim wherein the monofilaments are obtained by extrusion.

5. Fiber bundle according to the preceding claim wherein the bundle may further comprise a water-soluble film, in particular PVA, preferably the monofilament bundles are joined by a water-soluble film.

6. Fiber bundle according to any one of the preceding claims wherein the monofilament contains a weight percentage of:
polypropylene between 60 -100% (w/w);
polyethylene between 0 - 40% (w/w).

7. Fiber bundle according to any one of the preceding claims wherein the bundle comprises between 1000 and 8000 untwisted monofilaments, preferably between 2000 and 4000 untwisted monofilaments, more preferably between 2700 and 3900 untwisted monofilaments.

8. Fiber bundle according to any one of the preceding claims 1-6 wherein the bundle comprises between 1 and 50 twisted monofilaments, preferably between 10 and 40 twisted monofilaments, more preferably between 20 and 30 twisted monofilaments.

9. Fiber bundle according to any one of the preceding claims 1-6 and 8 wherein the twist degree of the fiber bundle ranges between 10-40 t/m, more preferably between 20-40 t/m.

10. Fiber bundle according to the preceding claims wherein the length of the fibers ranges between 38 mm and 54 mm.

11. Fiber bundle according to the preceding claims wherein the mechanical indentation of each monofilament causes an amplitude from 0.02-0.8 mm, preferably 0.02-0.7 mm.

12. Fiber bundle according to the preceding claims wherein the polymer monofilament further comprises additives, in particular dyes, lubricants, minerals, or mixtures thereof.

13. Mortar or concrete comprising the fiber bundle described in any one of the preceding claims.

14. Mortar or concrete according to the **preceding** claim comprising at least 2 kg _{fiber bundle}/m³ _{mortar or concrete} as described in any one of the preceding claims, preferably between 2.5-8 kg _{fiber bundle}/m³ mortar or concrete; preferably between 3-5 kg _{fiber bundle}/m³ mortar or concrete.

## Patentansprüche

1. Faserbündel zur Verstärkung von Mörtel oder Beton umfassend
eine Vielzahl von Polymer-Monofilamenten mit einem Verdrehungsgrad des Faserbündels in einem Bereich von 0 bis 50 t/m;
wobei der Durchmesser jedes Monofilaments zwischen 0,5 und 0,7 mm liegt;
wobei die Länge des Faserbündels zwischen 18 und 65 mm liegt;
wobei das Gewicht jedes Monofilaments zwischen 1500 und 3000 den liegt;
wobei jedes Monofilament eine mechanische Verzahnung aufweist, wobei die mechanische Verzahnung der Monofilamente eine Größe von 0,01-1 mm bewirkt.

2. Faserbündel nach dem vorangehenden Anspruch, wobei das Polymer der Polymer-Monofilamente Polyolefine umfasst.

3. Faserbündel nach dem vorangehenden Anspruch, wobei das Polymer der Monofilamente Polypropylen, Polyethylen oder Mischungen davon umfasst, bevorzugt Polypropylen.

4. Faserbündel nach dem vorangehenden Anspruch, wobei die Monofilamente durch Extrusion gewonnen werden.

5. Faserbündel nach dem vorangehenden Anspruch, wobei das Bündel ferner eine wasserlösliche Schicht, insbesondere PVA, umfassen kann, wobei die Monofilamentbündel bevorzugt durch eine wasserlösliche Schicht verbunden sind.

6. Faserbündel nach einem der vorangehenden Ansprüche, wobei das Monofilament folgenden Gewichtsprozentanteil aufweist:
Polypropylen zwischen 60 - 100 % (w/w);
Polyethylen zwischen 0 - 40 % (w/w).

7. Faserbündel nach einem der vorangehenden Ansprüche, wobei das Bündel zwischen 1000 und 8000 nicht verdrehte Monofilamente, bevorzugt zwischen 2000 und 4000 nicht verdrehte Monofilamente, besonders bevorzugt zwischen 2700 und 3900 nicht verdrehte Monofilamente umfasst.

8. Faserbündel nach einem der vorangehenden Ansprüche 1-6, wobei das Bündel zwischen 1 und 50 verdrehte Monofilamente, bevorzugt zwischen 10 und 40 verdrehte Monofilamente, besonders bevorzugt zwischen 20 und 30 verdrehte Monofilamente umfasst.

9. Faserbündel nach einem der vorangehenden Ansprüche 1-6 und 8, wobei der Verdrehungsgrad des Faserbündels zwischen 10-40 t/m, besonders bevorzugt zwischen 20-40 t/m liegt.

10. Faserbündel nach einem der vorangehenden Ansprüche, wobei die Länge der Fasern zwischen 38 mm und 54 mm liegt.

11. Faserbündel nach einem der vorangehenden Ansprüche, wobei die mechanische Verzahnung jedes Monofilaments eine Größe von 0,02-0,8 mm, bevorzugt 0,02-0,7 mm bewirkt.

12. Faserbündel nach einem der vorangehenden Ansprüche, wobei das Polymer-Monofilament zusätzlich Additive, insbesondere Farbstoffe, Gleitmittel, Mineralien oder Mischungen davon umfasst.

13. Mörtel oder Beton, umfassend das in einem der vorangehenden Ansprüche beschriebene Faserbündel.

14. Mörtel oder Beton nach dem vorangehenden Anspruch, umfassend mindestens 2 kg _{Faserbündel}/m³ _{Mörtel oder Beton}, wie in einem der vorhergehenden Ansprüche beschrieben, bevorzugt zwischen 2,5-8 kg _{Faserbündel}/m³ _{Mörtel oder Beton}; bevorzugt zwischen 3-5 kg _{Faserbündel}/m³ _{Mörtel oder Beton}.

## Revendications

1. Faisceau de fibres pour le renforcement de mortiers ou béton comprenant
une pluralité de monofilaments polymères ayant un degré de torsade du faisceau de fibres variant entre 0 et 50 t/m ;
dans lequel le diamètre de chaque monofilament varie entre 0,5 et 0,7 mm;
dans lequel la longueur du faisceau de fibres varie entre 18 et 65 mm ;
dans lequel le poids de chaque monofilament varie entre 1500 et 3000 den ;
dans lequel chaque monofilament comprend une indentation mécanique dans laquelle l'indentation mécanique desdits monofilaments cause une amplitude de 0,01-1 mm.

2. Faisceau de fibres selon la revendication précédente, dans lequel le polymère des monofilaments polymères comprend de la polyoléfine.

3. Faisceau de fibres selon la revendication précédente, dans lequel le polymère des monofilaments est du polypropylène, polyéthylène, ou des mélanges de ceux-ci, préférablement du polypropylène.

4. Faisceau de fibres selon la revendication précédente, dans lequel les monofilaments sont obtenus par extrusion.

5. Faisceau de fibres selon la revendication précédente, dans lequel le faisceau peut également comprendre un film hydrosoluble, en particulier du PVA, les faisceaux de monofilaments étant préférablement joints par un film hydrosoluble.

6. Faisceau de fibres selon l'une quelconque des revendications précédentes, dans lequel le monofilament contient un pourcentage pondéral de:
polypropylène entre 60-100% (p/p);
polyéthylène entre 0-40% (p/p).

7. Faisceau de fibres selon l'une quelconque des revendications précédentes, dans lequel le faisceau comprend entre 1000 et 8000 monofilaments non torsadés, préférablement entre 2000 et 4000 monofilaments non torsadés, plus préférablement entre 2700 et 3900 monofilaments non torsadés.

8. Faisceau de fibres selon l'une quelconque des revendications précédentes 1-6, dans lequel le faisceau comprend entre 1 et 50 monofilaments torsadés, préférablement entre 10 et 40 monofilaments torsadés, plus préférablement entre 20 et 30 monofilaments torsadés.

9. Faisceau de fibres selon l'une quelconque des revendications précédentes 1-6 et 8, dans lequel le degré de torsade du faisceau de fibres varie entre 10-40 t/m, plus préférablement entre 20-40 t/m.

10. Faisceau de fibres selon les revendications précédentes, dans lequel la longueur des fibres varie entre 38 mm et 54 mm.

11. Faisceau de fibres selon les revendications précédentes, dans lequel l'indentation mécanique de chaque monofilament cause une amplitude de 0,02-0,8 mm, préférablement 0,02-0,7 mm.

12. Faisceau de fibres selon les revendications précédentes, dans lequel le monofilament polymère comprend également des additifs, en particulier des colorants, des lubrifiants, des minéraux, ou des mélanges de ceux-ci.

13. Mortier ou béton comprenant le faisceau de fibres décrit dans l'une quelconque des revendications précédentes.

14. Mortier ou béton selon la revendication précédente comprenant au moins 2 kg de _{faisceau de fibres}/m³ _{mortier ou béton} tel que décrit dans l'une quelconque des revendications précédentes, préférablement entre 2,5 - 8kg de _{faisceau de fibres}/m³ mortier ou _{béton} ; préférablement entre 3-5kg de _{faisceau de fibres}/m³ ₘₒᵣₜᵢₑᵣ ou _{béton}.
